(19) Europäisches Patentamt
European Patent Office
Office européen des brevets

(11) EP 1 557 897 A1

(12) EUROPEAN PATENT APPLICATION
published in accordance with Art. 158(3) EPC

(43) Date of publication:
27.07.2005 Bulletin 2005/30

(51) Int Cl.7: H01M 8/06, H01M 8/04

(21) Application number: 03791354.8

(86) International application number:
PCT/JP2003/010886

(22) Date of filing: 27.08.2003

(87) International publication number:
WO 2004/021496 (11.03.2004 Gazette 2004/11)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 28.08.2002 JP 2002248736

(71) Applicant: Daikin Industries, Ltd.
Osaka-shi, Osaka 530-8323 (JP)

(72) Inventors:
• MATSUI, Nobuki c/o Kanaoka Factory
Sakai-shi, Osaka 591-8511 (JP)
• KAWAZOE, Masanobu c/o Kanaoka Factory
Sakai-shi, Osaka 591-8511 (JP)
• YONEMOTO, Kazuo c/o Kanaoka Factory
Sakai-shi, Osaka 591-8511 (JP)

(74) Representative: Goddar, Heinz J., Dr.
FORRESTER & BOEHMERT
Pettenkoferstrasse 20-22
80336 München (DE)

(54) FUEL CELL POWER GENERATION SYSTEM

(57) A fuel cell electrical power generation system (1) is provided which is made up of components including a desulfurizer (3), a prereformer (5), an internal reforming type solid electrolyte fuel cell (7) etc. The fuel cell (7) is made up of components including an air electrode (31), an electrolyte (33), a fuel electrode (35), an air chamber (37), a fuel chamber (39), external circuits etc. The prereformer (5) operates as follows. After being flowed through the desulfurizer (3), the town gas/air is flowed through the prereformer (5) during the startup phase of the internal reforming type solid electrolyte fuel cell (7), thereby to cause partial oxidation of hydrocarbons present in the town gas to generate a partial oxidation gas which contains CO and $H_2$. This partial oxidation gas is supplied to the fuel chamber (39).

FIG. 1

EP 1 557 897 A1

## Description

## TECHNICAL FIELD

The present invention relates to a fuel cell electrical power generation system.

## BACKGROUND ART

Fuel cell electrical power generation systems having solid electrolyte fuel cells are well known in the prior art.

Typically a solid electrolyte fuel cell consists of component parts including an electrolyte, a fuel electrode, an air electrode, a fuel chamber, an air chamber etc. The fuel electrode is mounted on one surface of the electrolyte. The air electrode is mounted on the other surface of the electrolyte. And the fuel chamber is defined on the fuel electrode side and the air chamber is defined on the air electrode side, in other words these chambers are separated by the electrolyte serving as a partition wall.

During the generation of electrical power, the fuel chamber is fed $H_2$ and CO while on the other hand the air chamber is fed air. And the oxygen in the air chamber is dissociated into oxygen ions ($O^{2-}$) at the interface between the air electrode and the electrolyte. The oxygen ions move towards the fuel electrode. Next, $O^{2-}$ reacts with $H_2$ and CO in the fuel chamber at the interface between the fuel electrode and the electrolyte, thereby generating $H_2O$ and $CO_2$. At this time, the generation of electrical power is carried out by electrons emitted from $O^{2-}$.

Incidentally, in order for oxygen ions ($O^{2-}$) to smoothly move towards the fuel electrode through the inside of the electrolyte, the temperature of the electrolyte is preferably from 700 up to 1000 degrees Centigrade. To this end, the solid electrolyte fuel cell's operating temperature is set so as to fall in the range of 700 to 1000 degrees Centigrade.

Since the solid electrolyte fuel cell's operating temperature is 700 to 1000 degrees Centigrade, this requires application of heat to the solid electrolyte fuel cell from the outside to activate it. To cope with this requirement, a burner is disposed near the solid electrolyte fuel cell to raise its temperature. And during the startup phase of the solid electrolyte fuel cell, the solid electrolyte fuel cell is preheated by the use of combustion heat of the burner.

## PROBLEMS TO BE SOLVED

The problem associated with the above prior art technique is that since the solid electrolyte fuel cell's operating temperature is high (700 to 1000 degrees Centigrade) it takes a long time to activate the solid electrolyte fuel cell in the past.

The present invention was made in view of the above-described drawback. Accordingly, an object of the present invention is to provide an improved fuel cell electrical power generation system having a solid electrolyte fuel cell. More specifically, the present invention intends to provide technologies capable of reducing the startup phase of such a solid electrolyte fuel cell.

## DISCLOSURE OF INVENTION

A first invention includes a reformer through which an oxygen-containing gas and a source gas are flowed and which has a catalytic part for causing the partial oxidation of hydrocarbons contained in the source gas during the flowing of the gasses. Additionally, the first invention further includes a solid electrolyte fuel cell which is disposed downstream of the reformer and which has a cell main unit which includes: a fuel electrode which is supplied with a partial oxidation gas which contains hydrogen generated as a result of the flowing of the source gas and the oxygen-containing gas through the reformer; an oxygen electrode which is supplied with an oxygen-containing gas; and an electrolyte which lies between the fuel electrode and the oxygen electrode, wherein an electrode reaction of the partial oxidation gas and the oxygen-containing gas is caused to take place in the fuel electrode, the oxygen electrode and the electrolyte.

Incidentally, the temperature, at which ions are allowed to move through the electrolyte, is a given temperature lower than the solid electrolyte fuel cell's operating temperature which is high (from about 700 up to about 1000 degrees Centigrade).

Here, in accordance with the present invention, a supply of partial oxidation gas is provided to the fuel electrode, thereby making it possible to heat not only the fuel electrode but also the electrolyte by the use of the heat held in the partial oxidation gas. When the temperature of the electrolyte rises to a predetermined degree, an electrode reaction is caused to take place in the fuel electrode, the oxygen electrode and the electrolyte by the use of hydrogen contained in the partial oxidation gas, thereby making it possible to start generating electrical power. Accordingly, the present invention makes it possible to start generating electricity at the predetermined temperature lower than the operating temperature of the solid electrolyte fuel cell.

Additionally, the electrode reaction accompanies the generation of heat. Therefore, the electrolyte is heated by making utilization of both the heat held in the partial oxidation gas and the heat associated with the electrode reaction. Therefore, the time taken for the solid electrolyte fuel cell to reach its operating temperature is reduced. Accordingly, the first invention is able to reduce the startup phase of the solid electrolyte fuel cell.

A second invention is intended for a fuel cell electrical power generation system comprising:

a reformer having a catalytic part which when a source gas is flowed therethrough converts hydrocarbons, contained in the source gas and having a carbon number equal to or greater than 2, into methane under the presence of hydrogen, and which when the source gas and an oxygen-containing gas are flowed therethrough causes the partial oxidation of hydrocarbons contained in the source gas, and

a solid electrolyte fuel cell which is disposed downstream of the reformer and which has a cell main unit which includes: a fuel electrode which is supplied with a hydrogen-containing gas; an oxygen electrode which is supplied with an oxygen-containing gas; and an electrolyte which lies between the fuel electrode and the oxygen electrode, wherein an electrode reaction of the hydrogen-containing gas and the oxygen-containing gas is caused to take place in the fuel electrode, the oxygen electrode and the electrolyte. And the fuel cell electrical power generation system of the second invention performs:

a startup operation in which the source gas and the oxygen-containing gas are flowed through the catalytic part of the reformer, and a partial oxidation gas which contains hydrogen generated as a result of the flowing of the source gas and the oxygen-containing gas through the reformer is supplied to the fuel electrode as the hydrogen-containing gas, and

a normal operation in which the source gas is flowed through the catalytic part of the reformer and a fuel gas which contains methane generated as a result of the flowing of the source gas through the reformer is supplied to the fuel electrode.

As a result of such arrangement, during the startup operation, a supply of partial oxidation gas is provided to the fuel electrode, thereby making it possible to heat not only the fuel electrode but also the electrolyte by the use of the heat held in the partial oxidation gas. When the temperature of the electrolyte rises to a predetermined degree, an electrode reaction is caused to take place in the fuel electrode, the oxygen electrode and the electrolyte by the use of hydrogen contained in the partial oxidation gas, thereby making it possible to start generating electrical power. Accordingly, the present invention makes it possible to start the generation of electricity at the predetermined temperature lower than the operating temperature of the solid electrolyte fuel cell.

Additionally, the electrode reaction accompanies the generation of heat. Therefore, the electrolyte is heated by making utilization of both the heat held in the partial oxidation gas and the heat associated with the electrode reaction. Therefore, the time taken for the solid electrolyte fuel cell to reach its operating temperature is reduced. Accordingly, the present invention is able to reduce the startup phase of the solid electrolyte fuel cell.

In addition to the above, during the normal operation, the reformer converts hydrocarbons with a carbon number equal to or greater than 2 into methane, in other words the fuel gas which is supplied to the fuel electrode does not contain hydrocarbons having a carbon number equal to or greater than 2. Therefore, even when the supply amount of water to the fuel electrode is small, there are few possibilities that carbon may deposit on the fuel electrode. Therefore, in accordance with the present invention, it is possible to prevent carbon from depositing on the fuel electrode of the solid electrolyte fuel cell.

In addition, during the normal operation, it is possible to convert the fuel gas into a reformed gas which contains hydrogen under the presence of water in the fuel electrode of the solid electrolyte fuel cell. Therefore, in accordance with the present invention, it is possible to use such a reformed gas as the hydrogen-containing gas.

A third invention is provided with a first heat exchange means for performing heat exchange between the source gas and the oxygen-containing gas prior to their entry into the reformer and the partial oxidation gas discharged out of the reformer.

Incidentally, when source and oxygen-containing gases of low temperature are supplied to the reformer, the catalytic part of the reformer is cooled by these gases. At this time, the reaction of causing partial oxidation of hydrocarbons contained in the source gas is inhibited in the reformer.

Here, in accordance with the present invention, the first heat exchange means operates to effect heat exchange of the source gas and the oxygen-containing gas prior to their entry into the reformer with the partial oxidation gas discharged out of the reformer, whereby these source and oxygen-containing gases are heated by the heat held in the partial oxidation gas. This therefore prevents the source and oxygen-containing gases from cooling the catalytic part of the reformer. Consequently, in accordance with the present invention, it is possible to cause the aforesaid partial oxidation reaction to take place actively in the reformer.

A fourth invention is provided with a first combustion means for burning the source gas and the oxygen-containing gas during the startup phase of the reformer. The fourth invention further includes a first combustion gas supply means for supplying to the reformer a combustion gas generated as a result of the burning of the source gas and the oxygen-containing gas in the first combustion means so that the reformer is heated.

Incidentally, when the temperature of the reformer exceeds a predetermined degree, it becomes possible to start a partial oxidation reaction in the reformer.

Here, in accordance with the present invention, the first combustion gas supply means provides a supply of combustion gas to the reformer during the startup phase of the reformer, whereby the reformer is heated with the heat held in the combustion gas. This arrangement makes it possible to increase the temperature of the reformer up to the predetermined degree, and a partial oxidation reaction starts in the reformer. Accordingly, in accordance with the present invention, the reformer is activated.

A fifth invention is provided with a second combustion means for burning the source gas and the oxygen-containing gas before the electrode reaction starts taking place. The fifth invention further includes a second combustion gas supply means for supplying to the oxygen electrode a combustion gas generated as a result of the burning of the source gas and the oxygen-containing gas in the second combustion means so that the oxygen electrode is heated.

As a result of such arrangement, the second combustion gas supply means provides a supply of combustion gas to the oxygen electrode before an electrode reaction starts taking place and, as a result, not only the oxygen electrode but also the electrolyte is heated with the heat held in the combustion gas. Accordingly, the electrolyte is heated with the heat held in the partial oxidation gas, the heat associated with the electrode reaction and the heat held in the combustion gas. Therefore, the time taken for the solid electrolyte fuel cell to reach its operating temperature is reduced further. Accordingly, the present invention is able to reduce the startup phase of the solid electrolyte fuel cell to a further extent.

A sixth invention is provided with a third combustion means for burning a source gas and a first oxygen-containing gas. The sixth invention further includes a

second heat exchange means for performing heat exchange between a combustion gas generated as a result of the burning of the source gas and the first oxygen-containing gas in the third combustion means and a second oxygen-containing gas different from the first oxygen-containing gas. In addition, the sixth invention further includes an oxygen-containing gas supply means for supplying to either or both the reformer and the oxygen electrode the second oxygen-containing gas heated by the second heat exchange means.

Incidentally, when a source gas and an oxygen-containing gas are burned, water and soot may be generated as a result of the burning of hydrocarbons contained in the source gas. Accordingly, when the combustion gas is supplied to the fuel electrode and to the oxygen electrode, there is a possibility that the fuel and oxygen electrodes may deteriorate by water and soot contained in the combustion gas.

In accordance with the present invention, the second heat exchange means effects heat exchange between the combustion gas and the second oxygen-containing gas and, in addition, the oxygen-containing gas supply means supplies to either or both the reformer and the oxygen electrode the second oxygen-containing gas. As a result, water and soot contained in the combustion gas are not supplied to either or both the fuel electrode and the oxygen electrode. Therefore, in accordance with the present invention, the fuel and oxygen electrodes are prevented from undergoing deterioration by water and soot.

In addition, the second heat exchange means effects heat exchange between the combustion gas and the second oxygen-containing gas, whereby the second oxygen-containing gas is heated. And, the oxygen-containing gas supply means supplies to either or both the reformer and the oxygen electrode the second oxygen-containing gas thus heated. Therefore, it becomes possible to raise the temperature of the electrolyte by making use of the heat held in the partial oxidation gas, the heat associated with the electrode reaction and the heat held in the second oxygen-containing gas. Therefore, the time taken for the solid electrolyte fuel cell to reach its operating temperature is reduced still further. Accordingly, the present invention is able to reduce the startup phase of the solid electrolyte fuel cell to a still further extent.

## EFFECTS OF INVENTION

In accordance with the first invention, a supply of partial oxidation gas is provided to the fuel electrode, thereby making it possible to heat not only the fuel electrode but also the electrolyte by the use of the heat held in the partial oxidation gas. When the temperature of the electrolyte rises to a predetermined degree, an electrode reaction is caused to take place in the fuel electrode, the oxygen electrode and the electrolyte by the use of hydrogen contained in the partial oxidation gas, thereby making it possible to start generating electrical power. Accordingly, it is possible to start the generation of electricity at the predetermined temperature lower than the operating temperature of the solid electrolyte fuel cell.

Additionally, the electrode reaction accompanies the generation of heat. Therefore, the temperature of the electrolyte is increased by making utilization of both the heat held in the partial oxidation gas and the heat associated with the electrode reaction. Therefore, the time taken for the solid electrolyte fuel cell to reach its operating temperature is reduced, and it becomes possible to reduce the startup phase of the solid electrolyte fuel cell.

In accordance with the second invention, during the startup operation a supply of partial oxidation gas is provided to the fuel electrode, thereby making it possible to heat not only the fuel electrode but also the electrolyte by the use of the heat held in the partial oxidation gas. When the temperature of the electrolyte rises to a predetermined degree, an electrode reaction is caused to take place in the fuel electrode, the oxygen electrode and the electrolyte by the use of hydrogen contained in the partial oxidation gas, thereby making it possible to start generating electrical power. Accordingly, it is possible to start the generation of electricity at the predetermined temperature lower than the operating temperature of the solid electrolyte fuel cell.

Additionally, the electrode reaction accompanies the generation of heat. Therefore, the temperature of the electrolyte is increased by making utilization of both the heat held in the partial oxidation gas and the heat associated with the electrode reaction. Therefore, the time taken for the solid electrolyte fuel cell to reach its operating temperature is reduced, and it becomes possible to reduce the startup phase of the solid electrolyte fuel cell.

In addition to the above, during the normal operation, the reformer converts hydrocarbons with a carbon number equal to or greater than 2 into methane, in other words the fuel gas being supplied to the fuel electrode does not contain hydrocarbons having a carbon number equal to or greater than 2. Therefore, even when the supply amount of water to the fuel electrode is small, there are few possibilities that carbon may deposit on the fuel electrode. Consequently, it is possible to prevent the occurrence of carbon deposition on the fuel electrode of the solid electrolyte fuel cell.

In addition, during the normal operation, it is possible to convert the fuel gas into a reformed gas which contains hydrogen under the presence of water in the fuel electrode of the solid electrolyte fuel cell. Therefore, it is possible to use such a reformed gas as the hydrogen-containing gas.

In accordance with the third invention, the first heat exchange means operates to effect heat exchange of the source gas and the oxygen-containing gas prior to their entry into the reformer with the partial oxidation gas discharged out of the reformer, whereby these material and oxygen-containing gases are heated by the heat held in the partial oxidation gas. This therefore prevents the material and oxygen-containing gases from cooling the catalytic part of the reformer, and it becomes possible to cause the aforesaid partial oxidation reaction to take place actively in the reformer.

In accordance with the fourth invention, the first combustion gas supply means provides a supply of combustion gas to the reformer during the startup phase of the reformer, whereby the reformer is heated with the heat held in the combustion gas. This arrangement makes it possible to increase the temperature of the reformer up to the predetermined degree, and a partial oxidation reaction starts in the reformer. Accordingly, the reformer is activated.

In accordance with the fifth invention, the second combustion gas supply means provides a supply of combustion gas to the oxygen electrode before an electrode reaction starts taking place and, as a result, not only the oxygen electrode but also the electrolyte is heated with the heat held in the combustion gas. Accordingly, the electrolyte is heated with the heat held in the partial oxidation gas, the heat associated with the electrode reaction and the heat held in the combustion gas. Therefore, the time taken for the solid electrolyte fuel cell to reach its operating temperature is reduced further, and it becomes possible to reduce the startup phase of the solid electrolyte fuel cell to a further extent.

In accordance with the sixth invention, the second heat exchange means effects heat exchange between the combustion gas and the second oxygen-containing gas and, in addition, the oxygen-containing gas supply means supplies to either or both the reformer and the oxygen electrode the second oxygen-containing gas. As a result, water and soot contained in the combustion gas are not supplied to either or both the fuel electrode and the oxygen electrode. Therefore, the fuel and oxygen electrodes are prevented from undergoing deterioration by water and soot.

In addition, the second heat exchange means effects heat exchange between the combustion gas and the second oxygen-containing gas, whereby the second oxygen-containing gas is heated. And, the oxygen-containing gas supply means supplies to either or both the reformer and the oxygen electrode the second oxygen-containing gas thus heated. Therefore, it becomes possible to raise the temperature of the electrolyte by making use of the heat held in the partial oxidation gas, the heat associated with the electrode reaction and the heat held in the second oxygen-containing gas. Therefore, the time taken for the solid electrolyte fuel cell to reach its operating temperature is reduced still further, and it becomes possible to reduce the startup phase of the solid electrolyte fuel cell to a still further extent.

## BRIEF DESCRIPTION OF DRAWINGS

Figure **1** is a diagram illustrating in outline an arrangement of a fuel cell electrical power generation system according to an embodiment of the present invention;
Figure **2** is a diagram illustrating in outline an arrangement of a fuel cell electrical power generation system according to another embodiment of the present invention; and
Figure **3** is a diagram illustrating in outline an arrangement of a fuel cell electrical power generation system according to still another embodiment of the present invention.

## BEST MODE FOR CARRYING OUT INVENTION

### EMBODIMENT 1

Hereafter, exemplary embodiments of the present invention will be described in detail with reference to the drawings.

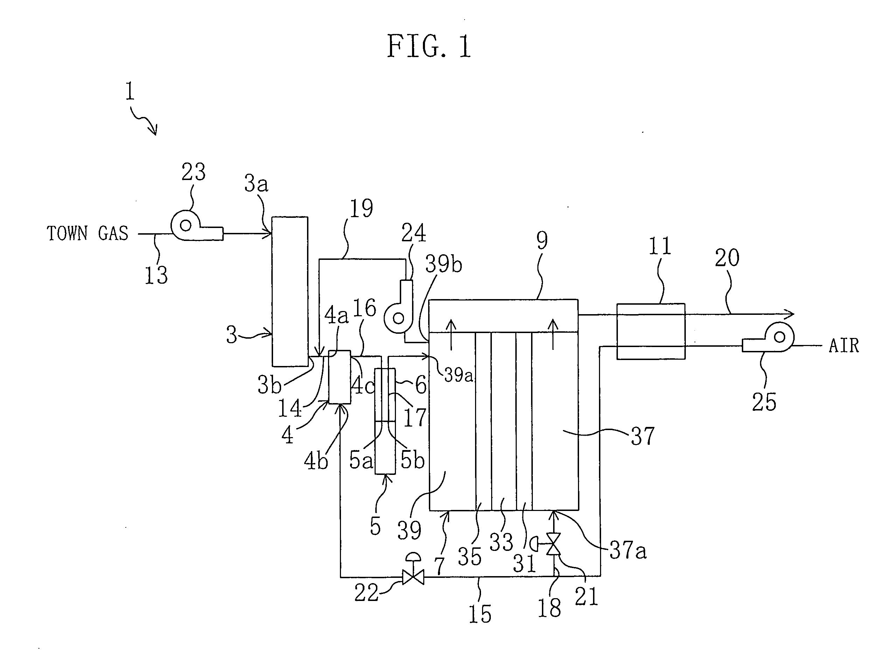

Referring to Figure **1,** there is shown a fuel cell electrical power generation system (1) according to the present embodiment. The fuel cell electrical power generation system (1) comprises: a desulfurizer (3); a first startup burner (4); a prereformer (5); a self heat exchanger (6); a solid electrolyte fuel cell (7) of the internal reforming type (hereafter referred to as the fuel cell); a combustor (9); a heat exchanger (11); first to eighth flow paths (13, 14, 15, 16, 17, 18, 19, 20), first and second electromagnetic valves (21, 22); first to third blowers (23, 24, 25), etc. A first combustion means, a reformer, a solid electrolyte fuel cell, a first heat-exchange means, a first combustion gas supply means and a partial oxidation gas supply means of the present invention are constituted by the first startup burner (4), the prereformer (5), the fuel cell (7), the self heat exchanger (6), the fourth flow path (16) and the fifth flow path (17), respectively.

One end of the first flow path (13) (i.e., the right-hand end in Figure 1) is connected to an entrance port (3a) of the desulfurizer (3).

The first blower (23) is a device for supplying a town gas to the desulfurizer (3) via the first flow path (13). The town gas is a gas which contains $CH_4$, $C_2H_6$, $C_3H_8$, and $C_4H_{10}$.

The town gas having flowed into the desulfurizer (3) is flowed therethrough. The desulfurizer (3) adsorbs sulfur compounds contained in the inflowing town gas. An exit port (3b) of the desulfurizer (3) is connected to one end of the second flow path (14) (i.e., the left-hand end).

The town gas having flowed out of the desulfurizer (3) and air are flowed through the first startup burner (4) during the startup phase of the prereformer (5) which will be described later. The town gas/air is burned in the first startup burner (4). The startup phase of the prereformer (5) is the time period until the time when the temperature of the prereformer (5) rises to 400 degrees Centigrade. A first entrance port (4a) of the first startup burner (4) is connected to the other end of the second flow path (14) (the right-hand end); a second entrance port (4b) of the first startup burner (4) is connected to one end of the third flow path (15); and an exit port (4c) of the first startup burner (4) is connected to one end of the fourth flow path (16).

The other end of the fourth flow path (16) is connected to an entrance port (5a) of the prereformer (5).

One end of the fifth flow path (17) is connected to an exit port (5b) of the prereformer (5), and the other end of the fifth flow path (17) is connected to an entrance port (39a) of a fuel chamber (39) of the fuel cell (7).

In the self heat exchanger (6), the fourth flow path (16) and the fifth flow path (17) extend parallel each other. And the self heat exchanger (6) effects heat exchange between the gas flowing through the fourth flow path (16) and the gas flowing through the fifth flow path (17).

During the startup phase of the fuel cell (7), the town gas/air etcetera having being flowed through the desulfurizer (3) is flowed through the preformer (5). The preformer (5) generates a partial oxidation gas which contains carbon monoxide and hydrogen which are formed by partial oxidation of hydrocarbons contained in the town gas. The startup phase of the fuel cell (7) is the time period until the time when the temperature of the fuel cell (7) rises to 700-1000 degrees Centigrade.

In addition, the prereformer (5) is configured so as to operate as follows. A source gas, i.e., a mixture of the town gas flowed through the desulfurizer (3) and a fuel re-circulation gas, is flowed through the prereformer (5) during the normal operation phase of the fuel cell electrical power generation system (1). The prereformer (5) does not reform $CH_4$ present in the source gas, but it does convert hydrocarbons (such as $C_2H_6$, $C_3H_8$, $C_4H_{10}$, etcetera) contained in the source gas and having a carbon number equal to or greater than 2, into $CH_4$. The normal operation phase of the fuel cell electrical power generation system (1) is the time period after the temperature of the fuel cell (7) rises to 700-1000 degrees Centigrade.

The prereformer (5) is provided with a pipe which has a hollow part in which is disposed a catalytic part. The catalytic part is formed of a precious metal catalyst, such as Ru, Rh, etcetera. Additionally, the catalytic part has the property to adsorb sulfur compounds present in the gas. Here, the amount of precious metal catalyst forming the catalytic part should be set to a value minimum-required for adsorbing sulfides present in the gas which have not been adsorbed in the desulfurizer (3) for a period from the time the fuel cell (7) is first activated until the time when the life of the fuel cell (7) is exhausted.

The fuel cell (7) is made up of: an air electrode (31) formed of (La, Ca) $MnO_3$; an electrolyte (33) formed of YSZ; a fuel electrode (35) formed of Ni-YSZ; an air chamber (37); a fuel chamber (39), external circuits (not shown), etcetera. The electrolyte (33) is impermeable to gases and electrons but is permeable to only ions. The fuel electrode (35) is disposed on one surface of the electrolyte (33) (the left-hand surface), and the air electrode (31) is disposed on the other side of the electrolyte (33) (the right-hand surface). And the fuel chamber (39) and the air chamber (37) are defined on the fuel electrode's (35) side and on the air electrode's (31) side, respectively, with the electrolyte (33) as a partition wall lying therebetween. The fuel electrode (35) and the air electrode (31) are connected together via an external circuit (not shown). The operating temperature of the fuel cell (7) is 700-1000 degrees Centigrade. The oxygen electrode, referred to in the present invention, is implemented by the air electrode (31).

An entrance port (37a) of the air chamber (37) is connected to one end of the sixth flow path (18) (the upper end). And when the first electromagnetic valve (21) is placed in the open state, a supply of air is provided to the air chamber (37).

During the startup phase of the fuel cell **(7),** a partial oxidation gas which contains CO and H$_2$ flows out of the prereformer **(5),** and is supplied to the fuel chamber **(39).**

In addition, during the normal operation of the fuel cell electrical power generation system **(1),** a CH$_4$-containing fuel gas flows out of the prereformer **(5),** and is supplied to the fuel chamber **(39)** .

A re-circulation port **(39b)** of the fuel chamber **(39)** is connected to a halfway part of the second flow path **(14)** via the seventh flow path **(19).** And a CO and H$_2$-containing fuel re-circulation gas discharged from the fuel chamber **(39)** is delivered to the second flow path **(14)** by the second blower **(24).** The fuel re-circulation gas flows into the second flow path **(14),** and is mixed with the town gas flowed through the desulfurizer **(3).**

The combustor **(9)** is connected to the air and fuel chambers **(37)** and **(39)** of the fuel cell **(7).** And the combustor **(9)** bums a CO and H$_2$-containing exhaust gas discharged from the fuel chamber **(39)** and an exhaust gas discharged from the air chamber **(37).**

The eighth flow path **(20)** is a flow path through which the exhaust gas burned in the combustor **(9)** flows. One end of the eighth flow path **(20)** (the left-hand end) is connected to the combustor **(9),** and the other end of the eighth flow path **(20)** (the right-hand end) is connected to an exhaust gas discharge port (not shown).

The third blower **(25)** supplies air to either or both the first startup burner **(4)** and the air chamber **(37)** of the fuel cell **(7)** via the third flow path **(15).**

In the heat exchanger **(11),** the third flow path **(15)** and the eighth flow path **(20)** extend parallel each other. The heat exchanger **(11)** is configured to effect heat exchange between the air flowing through the third flow path **(15)** and the exhaust gas flowing through the eighth flow path **(20).**

The second electromagnetic valve **(22)** is disposed between the junction point of the third flow path **(15)** and the sixth flow path **(18)** and the first startup burner **(4)** in the third flow path **(15).**

Here, how the fuel cell electrical power generation system **(1)** operates is described below.

**STARTUP OF PREREFORMER**

First, the prereformer **(5)** is started up.

During the startup phase of the prereformer **(5),** the first electromagnetic valve **(21)** is placed in the closed state, while the second electromagnetic valve **(22)** is placed in the open state. The first startup burner **(4)** is in operation.

A town gas flows into the desulfurizer **(3)** via the first flow path **(13).** And the town gas having entered the inside of the desulfurizer **(3)** flows therethrough, and sulfur compounds contained in the town gas are removed.

Then, the sulfide-free town gas leaves the desulfurizer **(3),** and flows into the first startup burner **(4)** via the second flow path **(14).**

On the other hand, a stream of air flows into the heat exchanger **(11)** via the third flow path **(15).** The heat exchanger **(11)** effects heat exchange between the air and the exhaust gas burned in the combustor **(9).** Thereby, the air is heated.

The air thus heated flows out of the heat exchanger **(11),** and enters the inside of the first startup burner **(4)** via the third flow path **(15).**

And the town gas and the air which have flowed into the first startup burner **(4)** are burned in the first startup burner **(4).**

A combustion gas, generated as a result of the burning of the town gas and the air in the first startup burner **(4),** flows out of the first startup burner **(4),** and then enters the inside of the self-heat exchanger **(6)** via the fourth flow path **(16).** And the self-heat exchanger **(6)** effects heat exchange between the combustion gas flowing through the fourth flow path **(16)** and the combustion gas flowing through the fifth flow path **(17).**

After flowing through the self-heat exchanger **(6),** the combustion gas flows into the prereformer **(5).** And the combustion gas flows through the prereformer **(5),** as a result of which the catalytic part of the prereformer **(5)** is preheated. Preheating of the catalytic part of prereformer **(5)** is carried out until the time when the temperature of the catalytic part rises to 400 degrees Centigrade. The reason for such preheating of the catalytic part of the prereformer **(5)** up to 400 degrees Centigrade is that when the temperature of the catalytic part increases up to 400 degrees Centigrade it becomes possible to start a partial oxidation reaction (described later) in the prereformer **(5).**

After flowing through the prereformer **(5),** the combustion gas leaves the prereformer **(5),** and flows into the fuel chamber **(39)** of the fuel cell **(7)** via the fifth flow path **(17).**

The combustion gas having entered inside of the fuel chamber **(39)** passes through the combustor **(9)** and then through the eighth flow path **(20),** and is discharged from the discharge port.

**PREHEATING OF FUEL CELL**

Next, preheating of the fuel cell **(7)** is carried out.

Here, the first startup burner **(4)** is stopped when the temperature of the catalytic part of prereformer **(5)** rises to 400 degrees Centigrade. At this time, the first electromagnetic valve **(21)** which is placed in the closed state during the startup phase of the prereformer **(5)** is now placed in the open state.

First, at the junction point of the second flow path **(14)** and the seventh flow path **(19),** a town gas is mixed with a fuel re-circulation gas which contains CO and H$_2$. A source gas which is a mixture of the town gas and the fuel re-circulation gas flows into the first startup burner **(4)** in the stopped state via the second flow path **(14)**.

On the other hand, the air flows out of the heat exchanger **(11)**, flows in the third flow path **(15)**, and arrives at the junction point of the third flow path **(15)** and the sixth flow path **(18)**. And at the junction point, the air flow branches off to the third flow path **(15)** and to the sixth flow path **(18)**.

The air having flowed into the third flow path **(15)** passes therethrough and enters the inside of the first startup burner **(4)** in the stopped state.

The source gas/air having entered the inside of the first startup burner **(4)** leaves there, and then enters the inside of the self heat exchanger **(6)** via the fourth flow path **(16)**. And the self heat exchanger **(6)** effects heat exchange between the source gas flowing through the fourth flow path **(16)** and the partial oxidation gas flowing through the fifth flow path **(17)**. Thereby, the source gas passing through the fourth flow path **(16)** is heated.

The source gas thus heated flows into the prereformer **(5)**. And when the source gas flows through the catalytic part of the prereformer **(5)**, a partial oxidation reaction, in which hydrocarbon contained in the source gas reacts with oxygen to form carbon monoxide and hydrogen, takes place.

The aforesaid partial oxidation reaction, which is an exothermic reaction, is expressed as follows.

$$C_nH_{2n+2} + n/2O_2 \rightarrow nCO + (n+1) H_2 \qquad (1)$$

That is, in the catalytic part of the prereformer **(5)**, the reaction expressed by the reaction formula (1) takes place, and carbon monoxide and hydrogen are generated from hydrocarbon and oxygen.

From the reaction formula (1), it can be considered that two different reactions take place at the same time, i.e., a forward reaction from the left side to the right side and a backward reaction from the right side to the left side. However, the forward reaction is more than the backward reaction. Accordingly, it can be considered that the forward reaction takes place.

Incidentally, when the town gas is flowed through the desulfurizer **(3)**, not all the sulfur compounds contained in the town gas are removed by the desulfurizer **(3)**. Here, the catalytic part of the prereformer **(5)** has the property to adsorb sulfur compounds present in the gas. Therefore, the sulfur compounds still lingering in the source gas are removed when flowed through the prereformer **(5)**.

Next, a partial oxidation gas which contains CO and $H_2$ generated as a result of the flowing of the source gas through the prereformer **(5)** flows into the fuel chamber **(39)** of the fuel cell **(7)** via the fifth flow path **(17)**. Here, since the reaction expressed by the formula (1) is an exothermic reaction, the partial oxidation gas holds heat. Therefore, when the partial oxidation gas flows through the fuel chamber **(39)**, not only the fuel electrode **(35)** but also the electrolyte **(33)** is preheated.

On the other hand, the air having flowed into the sixth flow path **(18)** passes therethrough and enters the inside of the air chamber **(37)** of the fuel cell **(7)**. And the air flows through the air chamber **(37)**, thereby preheating not only the air electrode **(31)** but also the electrolyte **(33)**.

Preheating of the fuel cell **(7)** continues until the time when the temperature of the fuel cell **(7)** rises to 500 degrees Centigrade. Here, since ions are allowed to move in the electrolyte **(33)** when the temperature of the fuel cell **(7)** rises to 500 degrees Centigrade, this enables the fuel cell **(7)** to generate electrical power.

Next, the CO and $H_2$-containing fuel re-circulation gas discharged from the fuel chamber **(39)** flows into the second flow path **(14)** via the seventh flow path **(19)**. And the fuel re-circulation gas is mixed with the town gas at the junction point of the second flow path **(14)** and the seventh flow path **(19)**.

In addition, the CO and $H_2$-containing exhaust gas discharged from the fuel chamber **(39)** and the exhaust gas discharged from the air chamber **(37)** flow into the combustor **(9)** and are burned there.

Such combustion is expressed by the following reaction formulas.

$$CO + 1/2O_2 \rightarrow CO_2 \qquad (2)$$

$$H_2 + 1/2O_2 \rightarrow H_2O \qquad (3)$$

The exhaust gas thus burned flows into the heat exchanger **(11)** via the eighth flow path **(20)**, and exchanges heat with the air flowing through the third flow path **(15)**.

After flowing through the heat exchanger **(11)**, the exhaust gas passes through the eighth flow path **(20)**, and is discharged from a discharge port.

**START OF ELECTRICAL POWER GENERATION**

Next, while continuously preheating the fuel cell **(7)**, the generation of electrical power is started. The startup operation as referred to in the present invention corresponds to the operation during the preheating of the fuel cell **(7)** and to the operation at the time when the fuel cell **(7)** starts generating electrical power.

Here, when the temperature of the fuel cell **(7)** rises to 500 degrees Centigrade, the first startup burner **(4)** still remains in the stopped state. At this time, the first and second electromagnetic valves **(21, 22)** are still in their open state.

The partial oxidation gas which contains CO

and $H_2$ generated as a result of the flowing of the source gas through the prereformer **(5)** flows into the fuel chamber **(39)** of the fuel cell **(7)** via the fifth flow path **(17).**

On the other hand, the air flows into the air chamber **(37)** of the fuel cell **(7)** via the third and sixth flow paths **(15, 18).**

Next, how the fuel cell **(7)** operates is explained in detail.

First, a reaction, in which oxygen present in the air chamber **(37)** is dissociated at the interface between the air electrode **(31)** and the electrolyte **(33)** and becomes oxygen ions, takes place.

The aforesaid reaction is expressed as follows.

$$1/2 O_2 + 2e^- \rightarrow O^{2-} \qquad (4)$$

The oxygen ions move towards the fuel electrode **(35)** through the electrolyte **(33).**

And a reaction, in which the oxygen ions react with carbon monoxide and hydrogen contained in the partial oxidation gas in the fuel chamber **(39)** to generate carbon dioxide and steam at the interface between the fuel electrode **(35)** and the electrolyte **(33),** takes place.

The aforesaid reaction is expressed as follows.

$$CO + O^{2-} \rightarrow CO_2 + 2e^- \qquad (5)$$

$$H_2 + O^{2-} \rightarrow H_2O + 2e^- \qquad (6)$$

At this time, electrons emitted from $O^{2-}$ flow into an external circuit from the fuel electrode **(35).** And electric energy is taken out in the external circuit and the generation of electrical power starts.

Further, electrons flow into the air electrode **(31)** from the external circuit, and, as shown in the reaction formula **(4),** react with oxygen in the air chamber **(37)** at the interface between the air electrode **(31)** and the electrolyte **(33),** and become oxygen ions.

Preheating of the fuel cell **(7)** is carried out with the heat held in the partial oxidation gas, the heat held in the air and the heat generated at the time of the generation of electrical power. The fuel cell **(7)** is continuously preheated until the time when the temperature of the fuel cell **(7)** rises to 700-1000 degrees Centigrade (the operating temperature). Here, since ions are allowed to move smoothly in the electrolyte **(33)** when the temperature of the fuel cell **(7)** rises to 700 degrees Centigrade, the fuel cell electrical power generation system becomes ready to perform its normal operation (described later).

Next, the fuel re-circulation gas which contains $CO_2$ $H_2O$, CO and $H_2$ is discharged from the fuel chamber **(39)** and flows into the second flow path **(14)** via the seventh flow path **(19).** And the fuel re-circulation gas is mixed with the town gas at the junction point of the second flow path **(14)** and the seventh flow path **(19).**

**NORMAL OPERATION OF FUEL CELL ELECTRICAL POWER GENERATION SYSTEM**

Next, the fuel cell electrical power generation system **(1)** carries out its normal operation.

The first startup burner **(4)** still remains in the stopped state when the temperature of the fuel cell **(7)** rises to 700-1000 degrees Centigrade. At this time, the first electromagnetic valve **(21)** is still in the open state. On the other hand, the second electromagnetic valve **(22)** is placed in the closed state.

A source gas which is a mixture of the town gas and the fuel re-circulation gas enters the inside of the prereformer **(5)** via the second and fourth flow paths **(14, 16).**

Next, how the prereformer **(5)** operates is described in detail.

The source gas flows through the catalytic part of the prereformer **(5),** wherein in the catalytic part a methanation reaction, in which hydrocarbons having a carbon number equal to or greater than 2 react with hydrogen to form methane, takes place actively while a steam reforming reaction, in which hydrocarbons having a carbon number equal to or greater than 2 react with steam to form hydrogen and carbon monoxide, takes place somewhat. The methanation reaction takes place throughout the catalytic part of prereformer **(5).** On the other hand, the steam reforming reaction takes place mainly at an area of the catalytic part on the side of the entrance port **(5a)** of the prereformer **(5).**

The methanation reaction, which is an exothermic reaction, is expressed by the following reaction formula.

$$C_nH_{2n+2} + (n-1)\,H_2 \rightarrow nCH_4 \qquad (7)$$

Here, $H_2$ used in the methanation reaction includes $H_2$ generated in the steam reforming reaction and $H_2$ contained in the fuel re-circulation gas.

The steam reforming reaction, which is an endothermal reaction, is expressed by the following reaction formula.

$$C_nH_{2n+2} + nH_2O \rightarrow nCO + (2n+1)\,H_2 \qquad (8)$$

That is, in the catalytic part of the prereformer **(5),** both the reaction expressed by the reaction formula (7) and the reaction expressed by the reaction formula (8) take place, and methane, carbon monoxide and hydrogen are generated from hydrocarbons with a carbon number equal to or greater than 2.

The fuel gas which contains $CH_4$ and $H_2O$ gen-

erated as a result of the flowing of the source gas through the prereformer **(5)** enters the inside of the fuel chamber **(39)** of the fuel cell **(7)** via the fifth flow path **(17)**.

On the other hand, air enters the inside of the air chamber **(37)** of the fuel cell **(7)** via the third and sixth flow paths **(15, 18)**.

Next, how the fuel cell **(7)** operates is described below.

In the fuel chamber **(39),** a steam reforming reaction, in which methane reacts with steam to form carbon monoxide and hydrogen, takes place by the catalytic action ofNi contained in the fuel electrode **(35)**.

Such a steam reforming reaction, which is an endothermal reaction, is expressed by the following reaction formula.

$$CH_4 + H_2O \rightarrow CO + 3H_2 \qquad (9)$$

Thereafter, in the fuel cell **(7),** the same electrode reaction as the above takes place. Thereby, electrical power is generated.

In the present embodiment, it is arranged such that during the startup phase of the fuel cell **(7)** the partial oxidation gas is supplied to the fuel chamber **(39)** via the fourth flow path **(16).** As a result of such arrangement, not only the fuel electrode **(35)** but also the electrolyte **(33)** is preheated by making use of the heat held in the partial oxidation gas. And when the temperature of the electrolyte **(33)** rises to 500 degrees Centigrade, an electrode reaction is caused to take place in the fuel cell **(7)** by the use of CO and $H_2$ contained in the partial oxidation gas, thereby making it possible to start the generation of electrical power. To sum up, it is possible for the fuel cell **(7)** to start generating electricity at a temperature of 500 degrees Centigrade lower than the operating temperature of the fuel cell **(7)**.

The electrode reaction accompanies the generation of heat. This therefore makes it possible to preheat the electrolyte **(33)** by the heat held in the partial oxidation gas and the heat associated with the electrode reaction. Therefore, it becomes possible to reduce the length of time until the temperature of the fuel cell **(7)** reaches its operating temperature. Consequently, the startup phase of the fuel cell **(7)** is reduced.

In addition, during the startup phase of the fuel cell **(7),** the self heat exchanger **(6)** effects heat exchange between the source gas/air prior to entry into the prereformer **(5)** and the partial oxidation gas discharged from the prereformer **(5),** whereby the source gas/air is heated by the heat held in the partial oxidation gas. As the result of this, the catalytic part of the prereformer **(5)** is prevented from being cooled by the source gas/air. Therefore, in the prereformer **(5),** the aforesaid partial oxidation reaction is caused to take place actively.

Furthermore, the combustion gas discharged from the first startup burner **(4)** is supplied to the prereformer **(5)** via the fourth flow path **(16)** during the startup phase of the prereformer **(5),** so that the prereformer **(5)** is preheated by the heat held in the combustion gas. Therefore, it is possible to increase the temperature of the prereformer **(5)** to 400 degrees Centigrade, thereby allowing a partial oxidation reaction to take place in the prereformer **(5).** Consequently, the present embodiment enables the prereformer **(5)** to start operating.

During the normal operation of the fuel cell electrical power generation system **(1),** the prereformer **(5)** reforms hydrocarbons having a carbon number equal to or greater than 2 (i.e., $C_2H_6$, $C_3H_8$, $C_4H_{10}$ etcetera) present in the source gas into $CH_4$. Therefore, the fuel gas which is supplied to the fuel chamber **(39)** does not contain hydrocarbons whose carbon number is 2 or greater. Therefore, the hydrocarbon contained in the fuel gas is only $CH_4$, so that even when the supply amount of water to the fuel chamber **(39)** is small, there are few possibilities that carbon may deposit in the fuel chamber **(39).** Consequently, in the normal operation of the fuel cell electrical power generation system **(1),** it is possible to prevent the occurrence of carbon deposition in the fuel chamber **(39)** of the fuel cell **(7)**.

**EMBODIMENT 2**

In a fuel cell electrical power generation system **(1)** according to a second embodiment of the present invention, a combustion gas is supplied to the air chamber before starting generating electrical power.

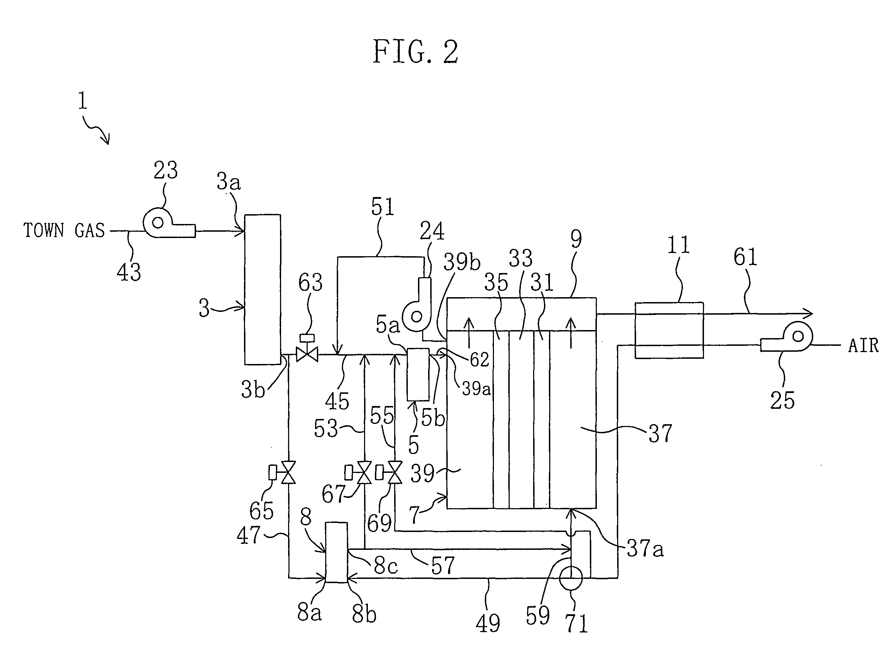

Referring to Figure **2,** the fuel cell electrical power generation system **(1)** of the present embodiment includes: a desulfurizer **(3);** a second startup burner **(8);** a prereformer **(5);** a fuel cell **(7);** a combustor **(9);** a heat exchanger **(11);** ninth to nineteenth flow paths **(43, 45, 47, 49, 51, 53, 55, 57, 59, 61, 62);** third to sixth electromagnetic valves **(63, 65, 67, 69);** a directional control valve **(71);** first to third blowers **(23, 24, 25)** etcetera. And a second combustion means of the present invention is constituted by the second startup burner **(8),** and a second combustion gas supply means of the present invention is constituted by the sixteenth and seventeenth flow paths **(57, 59)**.

One end of the ninth flow path **(43)** (the right-hand end in Figure **2)** is connected to an entrance port **(3a)** of the desulfurizer **(3)**.

One end of the tenth flow path **(45)** (the left-hand end) is connected to an exit port **(3b)** of the desulfurizer **(3),** and the other end of the tenth flow path **(45)** (the right-hand end) is connected to an entrance port **(5a)** of the prereformer **(5)**.

One end of the eleventh flow path **(47)** is connected to between the exit port **(3b)** of the desulfurizer **(3)** and the third electromagnetic valve **(63)** in the tenth flow path **(45).** The other end of the eleventh flow path **(47)** is connected to a first entrance port **(8a)** of the second startup burner **(8).**

One end of the twelfth flow path **(49)** is connected to a second entrance port **(8b)** of the second startup burner **(8).**

One end of the thirteenth flow path **(51)** is connected to a re-circulation port **(39b)** of the fuel chamber **(39).** The other end of the thirteenth flow path **(51)** is connected to between the junction point of the tenth flow path **(45)** and the fourteenth flow path **(53)** and the third electromagnetic valve **(63)** in the tenth flow path **(45).**

One end of the fourteenth flow path **(53)** (the lower end) is connected to a halfway part of the sixteenth flow path **(57).** The other end of the fourteenth flow path **(53)** (the upper end) is connected to between the junction point of the tenth flow path **(45)** and the thirteenth flow path **(51)** and the junction point of the tenth flow path **(45)** and the fifteenth flow path **(55)** in the tenth flow path **(45).**

One end of the fifteenth flow path **(55)** is connected to between the heat exchanger **(11)** and the directional control valve **(71)** in the twelfth flow path **(49).** The other end of the fifteenth flow path **(55)** is connected to between the junction point of the tenth flow path **(45)** and the fourteenth flow path **(53)** and the entrance port **(5a)** of the prereformer **(5)** in the tenth flow path **(45).**

One end of the sixteenth flow path **(57)** (the left-hand end) is connected to an exit port **(8c)** of the second startup burner **(8).** The other end of the sixteenth flow path **(57)** (the right-hand end) is connected to a halfway part of the seventeenth flow path **(59).**

One end of the seventeenth flow path **(59)** (the lower end) is connected to the directional control valve **(71).** The other end of the seventeenth flow path **(59)** (the upper end) is connected to an entrance port **(37a)** of the air chamber **(37).**

One end of the eighteenth flow path **(61)** (the left-hand end) is connected to the combustor **(9).** The other end of the eighteenth flow path **(61)** (the right-hand end) is connected to an exhaust gas discharge port (not shown).

One end of the nineteenth flow path **(62)** (the left-hand end) is connected to the exit port **(5b)** of the prereformer **(5).** The other end of the nineteenth flow path **(62)** (the right-hand end) is connected to an entrance port **(39a)** of the fuel chamber **(39)** of the fuel cell **(7).**

In the inside of the heat exchanger **(11),** the twelfth flow path **(49)** and the eighteenth flow path **(61)** extend parallel each other.

The fourth electromagnetic valve **(65)** is disposed midway along the eleventh flow path **(47);** the fifth electromagnetic valve **(67)** is disposed midway along the fourteenth flow path **(53);** and the sixth electromagnetic valve **(69)** is disposed midway along the fifteenth flow path **(55).**

The directional control valve **(71)** is configured such that the air flowing through the twelfth flow path **(49)** is directed to flow through either the twelfth flow path **(49)** or the seventeenth flow path **(59).**

Here, how the fuel cell electrical power generation system **(1)** operates is described.

## STARTUP OF PREREFORMER AND PREHEATING OF AIR ELECTRODE

First, the prereformer **(5)** is started up and the air electrode **(31)** is preheated.

Here, during the startup of the prereformer **(5)** and the preheating of the air electrode **(31),** the fourth and fifth electromagnetic valves **(65, 67)** are placed in the open state, while the third and sixth electromagnetic valves **(63, 69)** are placed in the closed state. The directional control valve **(71)** permits the air to flow into the twelfth flow path **(49).** In addition, the second startup burner **(8)** is in operation.

The sulfide-free town gas leaves the desulfurizer **(3),** and flows into the second startup burner **(8)** via the tenth and eleventh flow paths **(45, 47).**

On the other hand, air enters the inside of the heat exchanger **(11)** via the twelfth flow path **(49).** The heat exchanger **(11)** effects heat exchange between the air and the exhaust gas burned in the combustor **(9).** Thereby, the air is heated.

The air thus heated flows into the second startup burner **(8)** by way of the twelfth flow path **(49).**

And the town gas/air having flowed into the second startup burner **(8)** is burned there.

A combustion gas generated as a result of the burning of the town gas/air in the second startup burner **(8)** flows out of the second startup burner **(8),** flows in the sixteenth flow path **(57),** and arrives at the junction point of the fourteenth flow path **(53)** and the sixteenth flow path **(57).** And at that junction point, the combustion gas flow branches off to the fourteenth flow path **(53)** and to the sixteenth flow path **(57).**

The combustion gas having flowed into the fourteenth flow path **(53)** enters the inside of the prereformer **(5)** via the fourteenth and tenth flow paths **(53, 45).** And the combustion gas flows through the prereformer **(5),** thereby preheating the catalytic part of the prereformer **(5).** Preheating of the catalytic part of the prereformer **(5)** is continuously carried out until the time when the temperature of the catalytic part rises to 400 degrees Centigrade.

After flowing through the prereformer **(5),** the combustion gas leaves there, and flows into the fuel chamber **(39)** via the fifth flow path **(17).**

On the other hand, the combustion gas having flowed into the sixteenth flow path **(57)** enters the inside of the air chamber **(37)** via the sixteenth and seventeenth flow paths **(57, 59).** And the combustion gas flows through the air chamber **(37),** thereby preheating not only the air electrode **(31)** but also the electrolyte **(33).**

Both the combustion gas flowed through the air chamber **(37)** and the combustion gas flowed through the fuel chamber **(39)** flow into the combustor **(9).**

## PREHEATING OF FUEL CELL

Next, preheating of the fuel cell **(7)** is carried out.

Here, when the temperature of the catalytic part of the prereformer **(5)** rises to 400 degrees Centigrade, the third, fourth and sixth electromagnetic valves **(63, 65, 69)** are placed in the open state, while the fifth electromagnetic valve **(67)** is placed in the closed state. At this time, the second startup burner **(8)** operates and the directional control valve **(71)** permits air to flow into the twelfth flow path **(49).**

First, the town gas having flowed out of the desulfurizer **(3)** flows in the tenth flow path **(45)** and arrives at the junction point of the tenth flow path **(45)** and the eleventh flow path **(47).** And at the junction point, the town gas flow branches off to the tenth flow path **(45)** and to the eleventh flow path **(47).**

The town gas having flowed into the tenth flow path **(45)** flows therein and arrives at the junction point of the tenth flow path **(45)** and the thirteenth flow path **(51).** And the town gas is mixed with a fuel re-circulation gas at the junction point.

A source gas, i.e., a mixture of the town gas and the fuel re-circulation gas, flows in the tenth flow path **(45)** and arrives at the junction point of the tenth flow path **(45)** and the fifteenth flow path **(55).** And the source gas is mixed with the air flowed through the fifteenth flow path **(55)** at the junction point.

The source gas/air enters the inside of the prereformer **(5)** via the tenth flow path **(45).** And by the flowing of the source gas/air through the catalytic part of the prereformer **(5),** the above-mentioned partial oxidation reaction takes place.

A partial oxidation gas generated as a result of the flowing of the source gas/air through the prereformer **(5)** flows into the fuel chamber **(39)** of the fuel cell **(7)** via the nineteenth flow path **(62).** And by the flowing of the partial oxidation gas through the fuel chamber **(39),** not only the fuel electrode **(35)** but also the electrolyte **(33)** is preheated.

On the other hand, the town gas having flowed into the eleventh flow path **(47)** enters the inside of the second startup burner **(8)** via the eleventh flow path **(47).**

In addition, the air flows in the twelfth flow path **(49)** and arrives at the junction point of the twelfth flow path **(49)** and the fifteenth flow path **(55).** And at the junction point, the air flow branches off to the twelfth flow path **(49)** and to the fifteenth flow path **(55).**

The air having flowed into the twelfth flow path **(49)** enters the inside of the second startup burner **(8)** via the twelfth flow path **(49).**

A combustion gas generated as a result of the burning of the town gas/air in the second startup burner **(8)** leaves the second startup burner **(8),** and flows into the air chamber **(37)** via the sixteenth and seventeenth flow paths **(57, 59).** And by the flowing of the combustion gas through the air chamber **(37),** not only the air electrode **(31)** but also the electrolyte **(33)** is preheated.

The fuel cell **(7)** is continuously preheated until the time when the temperature of the fuel cell **(7)** rises to 500 degrees Centigrade.

## START OF ELECTRICAL POWER GENERATION

Next, while continuously preheating the fuel cell **(7),** the generation of electrical power starts.

Here, the second startup burner **(8)** is stopped when the temperature of the fuel cell **(7)** rises to 500 degrees Centigrade. In addition, at this time, the third and sixth electromagnetic valves **(63, 69)** are placed in the open state, while the fourth and fifth electromagnetic valves **(65, 67)** are placed in the closed state. Furthermore, the directional control valve **(71)** permits air to flow into the seventeenth flow path **(59).**

A source gas which is a mixture of the town gas and the fuel re-circulation gas flows in the tenth flow path **(45)** and arrives at the junction point of the tenth flow path **(45)** and the fifteenth flow path **(55).** And the source gas is mixed with the air flowed through the fifteenth flow path **(55)** at the junction point.

The source gas/air enters the inside of the prereformer **(5)** via the tenth flow path **(45).** And by the flowing of the source gas/air through the catalytic part of the prereformer **(5),** a partial oxidation reaction is caused to take place.

A partial oxidation gas which contains CO and $H_2$ generated as a result of the flowing of the source gas through the prereformer **(5)** flows into the fuel chamber **(39)** via the nineteenth flow path **(62).**

On the other hand, air flows into the air chamber **(37)** via the twelfth and seventeenth flow paths **(49, 59).**

Thereafter, in the fuel cell **(7),** the same electrode reaction as the above takes place. Thereby, electrical power is generated.

The fuel cell **(7)** is preheated by making use of the heat held in the partial oxidation gas, the heat held in the air and the heat generated at the time of the generation of electrical power. The fuel cell **(7)** is continuously preheated until the time when the temperature of the fuel cell **(7)** rises to 700-1000 degrees Centigrade.

The start of an electrode reaction as referred to in the present invention corresponds to the time when the generation of electrical power starts.

## NORMAL OPERATION OF FUEL CELL ELECTRICAL POWER GENERATION SYSTEM

Next, the fuel cell electrical power generation system **(1)** performs its normal operation.

Here, the second startup burner **(8)** still remains in the stopped state when the temperature of the fuel cell **(7)** rises to 700-1000 degrees Centigrade. At this time, the third electromagnetic valve **(63)** is placed in the open state, while the fourth, fifth and sixth electromagnetic valves **(65, 67, 69)** are placed in the closed state. The directional control valve **(71)** permits air to flow into the seventeenth flow path **(59)**.

A source gas which is a mixture of the town gas and the fuel re-circulation gas flows into the prereformer **(5)** via the tenth flow path **(45)**. And in the prereformer **(5)**, the same methanation reaction as the above takes place.

A fuel gas which contains $CH_4$ and $H_2O$ generated as a result of the flowing of the source gas through the prereformer **(5)** flows into the fuel chamber **(39)** via the nineteenth flow path **(62)**.

On the other hand, air flows into the air chamber **(37)** via the twelfth and seventeenth flow paths **(49, 59)**.

Thereafter, in the fuel cell **(7)**, the same steam reforming and electrode reactions as the above take place. Thereby, electrical power is generated.

In the present embodiment, before starting generating electrical power, a combustion gas is supplied, via the sixteenth and seventeenth flow paths **(57, 59)**, to the air chamber **(37)**, whereby not only the air electrode **(31)** but also the electrolyte **(33)** is heated by making use of the heat held in the combustion gas. Therefore, the electrolyte **(33)** is heated by making use of the heat held in the partial oxidation gas, the heat associated with the electrode reaction and the heat held in the combustion gas. Consequently, the length of time until the fuel cell **(7)** reaches its operating temperature is reduced further. Therefore, the length of time required to activate the fuel cell **(7)** is reduced to a further extent.

## EMBODIMENT 3

A fuel cell electrical power generation system of the present embodiment is characterized in that air having undergone heat exchange with a combustion gas during the startup phase of the fuel cell is supplied to the prereformer and to the air chamber.

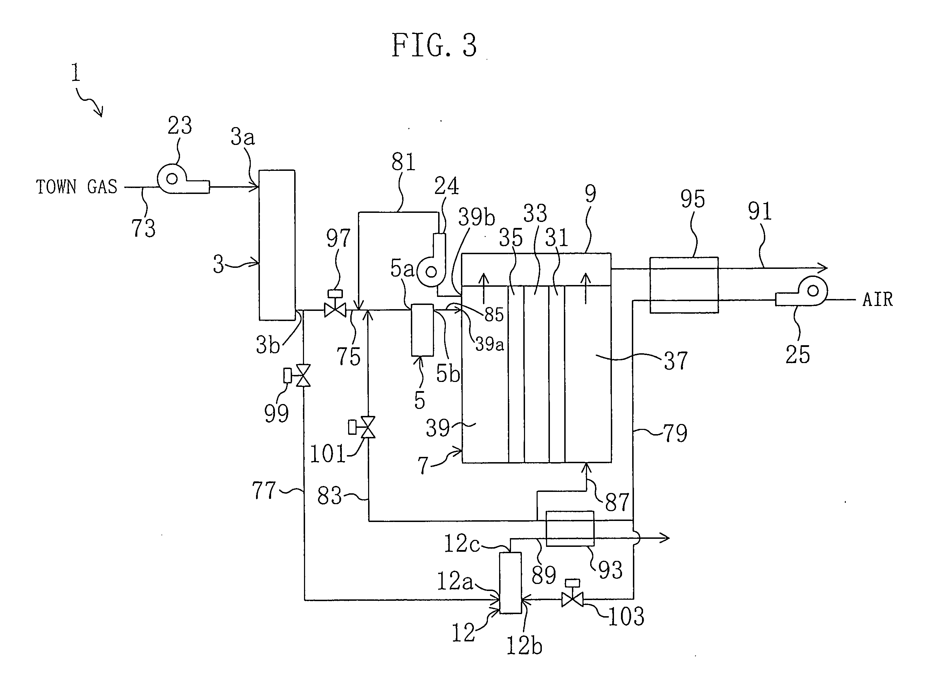

Referring to Figure **3**, the fuel cell electrical power generation system **(1)** according to the present embodiment comprises: a desulfurizer **(3)**; a third startup burner **(12)**; a prereformer **(5)**; a fuel cell **(7)**, a combustor **(9)**; first and second heat exchangers **(93, 95)**; twentieth to twenty-ninth flow paths **(73, 75, 77, 79, 81, 83, 85, 87, 89, 91)**; seventh to tenth electromagnetic valves **(97, 99,101,103)**; first to third blowers **(23, 24, 25)** et cetera. A third combustion means of the present invention is constituted by the third startup burner **(12)**; an oxygen containing gas supply means of the present invention is constituted by the twenty-first, twenty-fifth and twenty-seventh flow paths **(75, 83, 87)**; and a second heat exchange means of the present invention is constituted by the first heat exchanger **(93)**.

One end of the twentieth flow path **(73)** (the right-hand end in Figure **3)** is connected to an entrance port **(3a)** of the desulfurizer **(3)**.

One end of the twenty-first flow path **(75)** (the left-hand end) is connected to an exit port **(3b)** of the desulfurizer **(3)**. The other end of the twenty-first flow path **(75)** (the right-hand end) is connected to an entrance port **(5a)** of the prereformer **(5)**.

One end of the twenty-second flow path **(77)** is connected to between the exit port **(3b)** of the desulfurizer **(3)** and the seventh electromagnetic valve **(97)** in the twenty-first flow path **(75)**. The other end of the twenty-second flow path **(77)** is connected to a first entrance port **(12a)** of the third startup burner **(12)**.

One end of the twenty-third flow path **(79)** is connected to a second entrance port **(12b)** of the third startup burner **(12)**.

One end of the twenty-fourth flow path **(81)** is connected to a re-circulation port **(39b)** of the fuel chamber **(39)**. The other end of the twenty-fourth flow path **(81)** is connected to between the junction point of the twenty-first flow path **(75)** and the twenty-fifth flow path **(83)** and the seventh electromagnetic valve **(97)** in the twenty-first flow path **(75)**.

One end of the twenty-fifth flow path **(83)** is connected to between the second heat exchanger **(95)** and the tenth electromagnetic valve **(103)** in the twenty-third flow path **(79)**. The other end of the twenty-fifth flow path **(83)** is connected to between the junction point of the twenty-first flow path **(75)** and the twenty-fourth flow path **(81)** and the entrance port **(5a)** of the prereformer **(5)** in the tenth flow path **(45)**.

One end of the twenty-sixth flow path **(85)** (the left-hand end) is connected to the exit port **(5b)** of the prereformer **(5)**. The other end of the twenty-sixth flow path **(85)** (the right-hand end) is connected to an entrance port **(39a)** of the fuel chamber **(39)**.

One end of the twenty-seventh flow path **(87)** is connected to between the ninth electromagnetic valve **(101)** and the first heat exchanger **(93)** in the twenty-fifth flow path **(83)**. The other end of the twenty-seventh flow path **(87)** is connected to an entrance port **(37a)** of the air chamber **(37)**.

One end of the twenty-eighth flow path **(89)** is connected to an exit port **(12c)** of the third startup burner **(12)**. The other end of the twenty-eighth flow path **(89)** is connected to a combustion gas discharge port (not shown).

One end of the twenty-ninth flow path **(91)** (the left-hand end) is connected to the combustor **(9)**. The other end of the twenty-ninth flow path **(91)** (the right-hand end) is connected to an exhaust gas discharge port (not shown).

In the first heat exchanger **(93)**, the twenty-fifth flow path **(83)** and the twenty-eighth flow path **(89)** extend parallel each other.

In the second heat exchanger **(95)**, the twenty-third flow path **(79)** and the twenty-ninth flow path **(91)** extend parallel each other.

The eighth electromagnetic valve **(99)** is disposed midway along the twenty-second flow path **(77).** The ninth electromagnetic valve **(101)** is disposed between the junction point of the twenty-fifth flow path **(83)** and the twenty-seventh flow path **(87)** and the junction point of the twenty-fifth flow path **(83)** and the twenty-first flow path **(75)** in the twenty-fifth flow path **(83).**

Here, how the fuel cell electrical power generation system **(1)** operates is described below.

**STARTUP OF PREREFORMER AND PREHEATING OF AIR ELECTRODE**

First, the prereformer **(5)** is started up and the air electrode **(31)** is preheated.

During the startup phase of the prereformer **(5)** and the preheating phase of the air electrode **(31),** the eighth, ninth and tenth electromagnetic valves **(99,101,103)** are placed in the open state, while the seventh electromagnetic valve **(97)** is placed in the closed state. The third startup burner **(12)** is in operation.

A sulfide-free town gas flows out of the desulfurizer **(3)** and enters the inside of the third startup burner **(12)** via the twenty-first and second flow paths **(75, 77).**

On the other hand, air flows into the second heat exchanger **(95)** via the twenty-third flow path **(79).** And in the second heat exchanger **(95)** the air exchanges heat with the exhaust gas burned in the combustor **(9).** Thereby, the air is heated.

The air thus heated flows in the twenty-third flow path **(79)** and arrives at the junction point of the twenty-third flow path **(79)** and the twenty-fifth flow path **(83).** At the junction point, the air flow branches off to the twenty-third flow path **(79)** and to the twenty-fifth flow path **(83).**

The air having flowed into the twenty-third flow path **(79)** flows therein and enters the inside of the third startup burner **(12).**

On the other hand, the air having flowed into the twenty-fifth flow path **(83)** flows therein and enters the inside of the first heat exchanger **(93).**

The town gas/air having entered the inside of the third startup burner **(12)** is burned there.

A combustion gas generated as a result of the burning of the town gas/air in the third startup burner **(12)** flows out of the third startup burner **(12),** and enters the inside of the first heat exchanger **(93)** via the twenty-eighth flow path **(89).** And the first heat exchanger **(93)** effects heat exchange between the air flowing through the twenty-fifth flow path **(83)** and the combustion gas flowing through the twenty-eighth flow path **(89).** Thereby, the air is heated.

The air thus heated flows in the twenty-fifth flow path **(83)** and arrives at the junction point of the twenty-fifth flow path **(83)** and the twenty-seventh flow path **(87).** And at the junction point, the air flow branches off to the twenty-fifth flow path **(83)** and to the twenty seventh flow path **(87).**

The air having flowed into the twenty-fifth flow path **(83)** flows in the twenty-fifth and first flow paths **(83, 75)** and enters the inside of the prereformer **(5).** By the flowing of the air through the prereformer **(5),** the catalytic part of the prereformer **(5)** is preheated. The catalytic part of the prereformer **(5)** is preheated until the time when the temperature of the catalytic part amounts rises to 400 degrees Centigrade.

After being flowed through the prereformer **(5),** the air flows out of the prereformer **(5),** and enters the inside of the fuel chamber **(39)** via the twenty-sixth flow path **(85).**

On the other hand, the air having flowed into the twenty-seventh flow path **(87)** flows therein and enters the inside of the air chamber **(37).** And by the flowing of the air through the air chamber **(37),** not only the air electrode **(31)** but also the electrolyte **(33)** is preheated.

A stream of air discharged from the air chamber **(37)** and another stream of air discharged from the fuel chamber **(39)** flow through the combustor **(9)** and then through the twenty-ninth flow path **(91),** and are discharged from a discharge port.

On the other hand, the combustion gas flows out of the first heat exchanger **(93),** flows through the twenty-eighth flow path **(89),** and is discharged from a discharge port.

**PREHEATING OF FUEL CELL**

Next, preheating of the fuel cell **(7)** is carried out.

Here, when the temperature of the catalytic part of the prereformer **(5)** rises to 400 degrees Centigrade, all the electromagnetic valves **(97, 99,101,103)** are placed in the open state. The third startup burner **(12)** is still in operation.

The town gas having flowed out of the desulfurizer **(3)** flows in the twenty-first flow path **(75)** and arrives at the junction point of the twenty-first flow path **(75)** and the twenty-second flow path **(77).** And at the junction point, the town gas flow branches off to the twenty-first flow path **(75)** and to the twenty-second flow path **(77).**

The town gas having flowed into the twenty-first flow path **(75)** flows therein and arrives at the junction point of the twenty-first flow path **(75)** and the twenty-fourth flow path **(81).** And the town gas is mixed with a fuel re-circulation gas at the junction point.

A source gas which is a mixture of the town gas and the fuel re-circulation gas flows in the twenty-first flow path **(75)** and arrives at the junction point of the twenty-first flow path **(75)** and the twenty-fifth flow path **(83).** And at the junction point, the source gas is mixed with the air flowed through the twenty-fifth flow path **(83).**

The source gas/air mixture enters the inside of the prereformer **(5)** via the twenty-first flow path **(75).** And by the flowing of the source gas/air mixture through the catalytic part of the prereformer **(5),** the foregoing partial oxidation reaction is caused to take place.

A partial oxidation gas which contains CO and $H_2$ generated as a result of the flowing of the source gas/air mixture through the prereformer **(5)** enters the inside of the fuel chamber **(39)** via the twenty-sixth flow path **(85)**. And the partial oxidation gas flows through the fuel chamber **(39)**, thereby preheating not only the fuel electrode **(35)** but also the electrolyte **(33)**.

On the other hand, the air having flowed into the twenty-seventh flow path **(87)** flows therein and enters the inside of the air chamber **(37)**. And the air flows through the air chamber **(37)**, thereby preheating not only the air electrode **(31)** but also the electrolyte **(33)**.

The fuel cell **(7)** is preheated until the time when the temperature of the fuel cell **(7)** rises to 500 degrees Centigrade.

## START OF ELECTRICAL POWER GENERATION

Next, the generation of electrical power is started while the fuel cell **(7)** is being preheated continuously.

Here, the third startup burner **(12)** is stopped when the temperature of the fuel cell **(7)** rises to 500 degrees Centigrade. At this time, the seventh and ninth electromagnetic valves **(97,101)** are placed in the open state, while the eighth and tenth electromagnetic valves **(99,103)** are placed in the closed state.

The source gas/air mixture enters the inside of the prereformer **(5)** via the twenty-first flow path **(75)**. And by the flowing of the source gas/air mixture through the catalytic part of the prereformer **(5),** the foregoing partial oxidation reaction is caused to take place.

A partial oxidation gas which contains CO and $H_2$ generated as a result of the flowing of the source gas/air mixture through the prereformer **(5)** enters the inside of the fuel chamber **(39)** of the fuel cell **(7)** via the twenty-sixth flow path **(85)**.

On the other hand, the air having flowed into the twenty-seventh flow path **(87)** flows therein and enters the inside of the air chamber **(37)**.

Thereafter, in the fuel cell **(7),** the same electrode reaction as described above takes place. Thereby, the generation of electrical power is carried out.

In addition, the fuel cell **(7)** is preheated by the heat held in the partial oxidation gas, the heat held in the air, the heat generated at the time of the generation of electrical power. The fuel cell **(7)** is preheated until the time when the temperature of the fuel cell **(7)** rises to 700-1000 degrees Centigrade.

## NORMAL OPERATION OF FUEL CELL ELECTRICAL POWER GENERATION SYSTEM

Next, the fuel cell electrical power generation system **(1)** performs its normal operation.

The third startup burner **(12)** remains still in the stopped state when the temperature of the fuel cell **(7)** rises to 700-1000 degrees Centigrade. In addition, at this time, the seventh electromagnetic valve **(97)** is placed in the open state, while the eighth, ninth and tenth electromagnetic valves **(99,101,103)** are placed in the closed state.

A source gas which is a mixture of the town gas and the fuel re-circulation gas enters the inside of the prereformer **(5)** via the twenty-first flow path **(75)**. And in the prereformer **(5),** the same methanation reaction as described above takes place.

A fuel gas which contains $CH_4$ and $H_2O$ generated as a result of the flowing of the source gas through the prereformer **(5)** enters the inside of the fuel chamber **(39)** via the nineteenth flow path **(62)**.

On the other hand, air enters the inside of the air chamber **(37)** via the twenty-third and seventh flow paths **(79, 87)**.

Thereafter, in the fuel cell **(7),** the same steam reforming and electrode reactions as described above take place. Thereby, the generation of electrical power is conducted.

Incidentally, when the source gas/air mixture is burned, water and soot may be generated as a result of the burning of hydrocarbons contained in the source gas. Accordingly, when the combustion gas is supplied to the fuel chamber **(39)** and to the air chamber **(37),** there is a possibility that the fuel and air electrodes **(35)** and **(31)** may deteriorate by water and soot contained in the combustion gas.

In the present embodiment, the first heat exchanger **(93)** effects heat exchange between the combustion gas flowing through the twenty-eighth flow path **(89)** and the air flowing through the twenty-fifth flow path **(83);** and during the startup phase of the prereformer **(5)** and during the startup phase of the fuel cell **(7),** the air heated by the first heat exchanger **(93)** is supplied to the prereformer **(5)** via the twenty-fifth and first flow paths **(83, 75)** while being supplied to the air chamber **(37)** via the twenty-fifth and seventh flow paths **(83, 87)**. As a result of such arrangement, water/soot contained in the combustion gas is supplied neither to the fuel electrode **(35)** nor to the air electrode **(31)**. Therefore, both the fuel electrode **(35)** and the air electrode **(31)** are prevented from undergoing deterioration by water and soot.

In addition, during the startup phase of the prereformer **(5)** and during the startup phase of the fuel cell **(7),** the air heated by the first heat exchanger **(93)** is supplied to the prereformer **(5)** via the twenty-fifth and first flow paths **(83, 75)** while being supplied to the air chamber **(37)** via the twenty-fifth and seventh flow paths **(83, 87)**. Such arrangement makes it possible to raise the temperature of the electrolyte **(33)** by making use of the heat held in the partial oxidation gas, the heat associated with the electrode reaction and the heat held in the air heated by the first heat exchanger **(93)**. Therefore, the length of time until the temperature of the fuel cell **(7)** rises to its operating temperature is reduced further. Accordingly, the length of time taken to activate the fuel cell **(7)** is reduced further.

In the present embodiment, it is arranged such that the air heated by the first heat exchanger (93) is supplied to both the prereformer (5) and the air chamber (37); however, it suffices if the heated air is supplied to at least either one of the prereformer (5) and the air chamber (37).

**OTHER EMBODIMENTS**

In each of the aforesaid embodiments, precious metal catalysts, formed of Ru, Rh etcetera, are used to constitute the catalytic part of the prereformer (5). However, catalysts of the Ni family may be used.

In each of the aforesaid embodiments, the town gas is used as a source gas. However, the source gas may be natural gas, methanol, and coal gas containing naphtha and carbon monoxide.

In each of the aforesaid embodiments, the fuel cell is constituted by the solid electrolyte fuel cell (7) of the internal reforming type. However, the fuel cell may be any type of solid electrolyte fuel cell in which the above-mentioned steam reforming reaction does not take place within the cell.

**INDUSTRIAL APPLICABILITY**

As described above, the fuel cell electrical power generation system formed in accordance with the present invention is useful when applied to an electrical power generation system provided with a solid electrolyte fuel cell. Particularly, the fuel cell electrical power generation systems of the present invention are suitable for reducing the length of time taken to activate such a solid electrolyte fuel cell.

**Claims**

1. A fuel cell electrical power generation system comprising:

   a reformer (5) through which an oxygen-containing gas and a source gas are flowed and which has a catalytic part for causing the partial oxidation of hydrocarbons contained in said source gas, and
   a solid electrolyte fuel cell (7) which is disposed downstream of said reformer (5) and which has a cell main unit which includes: a fuel electrode (35) which is supplied with a partial oxidation gas which contains hydrogen generated as a result of the flowing of said source gas and said oxygen-containing gas through said reformer (5); an oxygen electrode (31) which is supplied with an oxygen-containing gas; and an electrolyte (33) which lies between said fuel electrode (35) and said oxygen electrode (31), wherein an electrode reaction of said partial oxidation gas and said oxygen-containing gas is caused to take place in said fuel electrode (35), said oxygen electrode (31) and said electrolyte (33).

2. A fuel cell electrical power generation system comprising:

   a reformer (5) having a catalytic part which when a source gas is flowed therethrough converts hydrocarbons, contained in said source gas and having a carbon number equal to or greater than 2, into methane under the presence of hydrogen, and which when an oxygen-containing gas and said source gas are flowed therethrough causes the partial oxidation of hydrocarbons contained in said source gas, and
   a solid electrolyte fuel cell (7) which is disposed downstream of said reformer (5) and which has a cell main unit which includes: a fuel electrode (35) which is supplied with a hydrogen-containing gas; an oxygen electrode (31) which is supplied with an oxygen-containing gas; and an electrolyte (33) which lies between said fuel electrode (35) and said oxygen electrode (31), wherein an electrode reaction of said hydrogen-containing gas and said oxygen-containing gas is caused to take place in said fuel electrode (35), said oxygen electrode (31) and said electrolyte (33),
   said fuel cell electrical power generation system performing:

   a startup operation in which said source gas and said oxygen-containing gas are flowed through said catalytic part of said reformer (5), and a partial oxidation gas which contains hydrogen generated as a result of the flowing of said source gas and said oxygen-containing gas through said reformer (5) is supplied to said fuel electrode (35) as said hydrogen-containing gas, and
   a normal operation in which said source gas is flowed through said catalytic part of said reformer (5) and a fuel gas which contains methane generated as a result of the flowing of said source gas through said reformer (5) is supplied to said fuel electrode (35).

3. The fuel cell electrical power generation system of claim 1 or claim 2 further comprising:

   first heat exchange means (6) for performing heat exchange between said source gas and said oxygen-containing gas prior to their entry into said reformer (5) and said partial oxidation gas discharged out of said reformer (5).

4. The fuel cell electrical power generation system of claim 1 or claim 2 further comprising:

> first combustion means **(4)** for burning said source gas and said oxygen-containing gas during the startup phase of said reformer **(5),** and
> first combustion gas supply means **(16)** for supplying to said reformer **(5)** a combustion gas generated as a result of the burning of said source gas and said oxygen-containing gas in said first combustion means **(4)** so that said reformer **(5)** is heated.

5. The fuel cell electrical power generation system of claim 1 or claim 2 further comprising:

> second combustion means **(8)** for burning said source gas and said oxygen-containing gas before said electrode reaction starts taking place, and
> second combustion gas supply means **(57, 59)** for supplying to said oxygen electrode **(31)** a combustion gas generated as a result of the burning of said source gas and said oxygen-containing gas in said second combustion means **(8)** so that said oxygen electrode **(31)** is heated.

6. The fuel cell electrical power generation system of claim 1 or claim 2 further comprising:

> third combustion means **(12)** for burning a source gas and a first oxygen-containing gas, second heat exchange means **(93)** for performing heat exchange between a combustion gas generated as a result of the burning of said source gas and said first oxygen-containing gas in said third combustion means **(12)** and a second oxygen-containing gas different from said first oxygen-containing gas, and
> oxygen-containing gas supply means **(75, 83, 87)** for supplying to either or both said reformer **(5)** and said oxygen electrode **(31)** said second oxygen-containing gas heated by said second heat exchange means **(93).**

EP 1 557 897 A1

## FIG. 1

TOWN GAS

AIR

# FIG. 2

EP 1 557 897 A1

# FIG. 3

EP 1 557 897 A1

## INTERNATIONAL SEARCH REPORT

| | International application No. |
|---|---|
| | PCT/JP03/10886 |

**A. CLASSIFICATION OF SUBJECT MATTER**
Int.Cl$^7$ H01M8/06, H01M8/04

According to International Patent Classification (IPC) or to both national classification and IPC

**B. FIELDS SEARCHED**

Minimum documentation searched (classification system followed by classification symbols)
Int.Cl$^7$ H01M8/06, H01M8/04

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-25588 A (Osaka Gas Co., Ltd.),<br>25 January, 2002 (25.01.02),<br>Claims; Figs. 1 to 7<br>(Family: none) | 1,3<br>4-6 |
| X<br>Y | JP 2001-155747 A (Daikin Industries, Ltd.),<br>08 June, 2001 (08.06.01),<br>Claims; Figs. 1 to 3<br>(Family: none) | 1,3<br>4-6 |
| X | WO 99/06138 A1 (EXXON RESEARCH AND ENGINEERING CO.),<br>11 February, 1999 (11.02.99),<br>Claims; Figs. 1 to 4<br>& JP 13-511430 A<br>Claims; Figs. 1 to 4 | 2 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 October, 2003 (01.10.03) | Date of mailing of the international search report<br>14 October, 2003 (14.10.03) |
|---|---|
| Name and mailing address of the ISA/<br>Japanese Patent Office | Authorized officer |
| Facsimile No. | Telephone No. |

Form PCT/ISA/210 (second sheet) (July 1998)

21

**INTERNATIONAL SEARCH REPORT**

International application No.

PCT/JP03/10886

| | C (Continuation). DOCUMENTS CONSIDERED TO BE RELEVANT | |
|---|---|---|
| Category* | Citation of document, with indication, where appropriate, of the relevant passages | Relevant to claim No. |
| Y | JP 2002-117887 A (Mitsubishi Heavy Industries, Ltd.), 19 April, 2002 (19.04.02), Claims; Fig. 1 (Family: none) | 4 |
| Y | JP 2002-216808 A (Honda Motor Co., Ltd.), 02 August, 2002 (02.08.02), Claims; Fig. 1 (Family: none) | 4 |
| Y | JP 11-185787 A (Matsushita Electric Industrial Co., Ltd.), 09 July, 1999 (09.07.99), Claims; Fig. 1 (Family: none) | 4 |
| Y | JP 11-67256 A (Sanyo Electric Co., Ltd.), 09 March, 1999 (09.03.99), Claims; Figs. 1 to 6 (Family: none) | 4,6 |
| Y | JP 59-98471 A (Director General, Agency of Industrial Science and Technology), 06 June, 1984 (06.06.84), Claims; Fig. 5 (Family: none) | 5 |
| Y | JP 1-124962 A (Fuji Electric Co., Ltd.), 17 May, 1989 (17.05.89), Claims; Figs. 1 to 3 (Family: none) | 5 |

Form PCT/ISA/210 (continuation of second sheet) (July 1998)